# EUROPEAN PATENT SPECIFICATION

(11) **EP 4 222 592 B1**
(45) Date of publication and mention of the grant of the patent: **02.12.2026**
(21) Application number: 21730110.0
(22) Date of filing: 19.05.2021
(51) Int. Cl.: G06F 7/544, H04L 9/00, G06F 21/53, G06F 21/71

(54) **PRIVATE ARTIFICIAL NEURAL NETWORKS WITH TRUSTED EXECUTION ENVIRONMENTS AND QUADRATIC HOMOMORPHIC ENCRYPTION**
PRIVATE KÜNSTLICHE NEURONALE NETZE MIT VERTRAUENSWÜRDIGEN AUSFÜHRUNGSUMGEBUNGEN UND QUADRATISCHER HOMOMORPHER VERSCHLÜSSELUNG
RÉSEAUX DE NEURONES ARTIFICIELS PRIVÉS À ENVIRONNEMENTS D'EXÉCUTION DE CONFIANCE ET CHIFFREMENT HOMOMORPHE QUADRATIQUE

(30) Priority: 25.03.2021 EP 21164884
(43) Date of publication of application: 09.08.2023
(73) Proprietor: NEC Laboratories Europe GmbH, 69115 Heidelberg (DE)
(72) Inventor: SORIENTE, Claudio, 69115 Heidelberg (DE); FIORE, Dario, 28223 Pozuelo de Alarcon (ES)
(74) Representative: Ullrich & Naumann PartG mbB
(86) International application number: PCT/EP2021/063353
(87) International publication number: WO 2022/199861

(56) References cited:
- WO-A1-2021/223873
- CN-A- 111 027 632
- FLORIAN TRAM\`ER ET AL: "Slalom: Fast, Verifiable and Private Execution of Neural Networks in Trusted Hardware", ARXIV.ORG CORNELL UNIVERSITY LIBRARY, 201 OLIN LIBRARY CORNELL UNIVERSITY ITHACA, NY 14853, 8 June 2018 (2018-06-08), XP081021624
- NICK HYNES ET AL: "Efficient Deep Learning on Multi-Source Private Data", ARXIV.ORG, CORNELL UNIVERSITY LIBRARY, 201 OLIN LIBRARY CORNELL UNIVERSITY ITHACA, NY 14853, 18 July 2018 (2018-07-18), XP081249732
- THEO RYFFEL ET AL: "Partially Encrypted Machine Learning using Functional Encryption", ARXIV.ORG, CORNELL UNIVERSITY LIBRARY, 201 OLIN LIBRARY CORNELL UNIVERSITY ITHACA, NY 14853, 24 May 2019 (2019-05-24), XP081502784
- SINEM SAV ET AL: "POSEIDON:Privacy-Preserving Federated Neural Network Learning", ARXIV.ORG, CORNELL UNIVERSITY LIBRARY, 201 OLIN LIBRARY CORNELL UNIVERSITY ITHACA, NY 14853, 1 September 2020 (2020-09-01), XP081753268

## Description

The present invention relates to a computer-implemented method of training an artificial neural network, ANN, on a remote host, as well as to a host processing system for remote training of an artificial neural network.

Artificial Neural Networks (ANN) enable a wide range of data mining applications. On the one hand, the resources required to train an ANN make the task particularly suited for resources-rich cloud deployments; on the other hand, the sensitivity of data used to train an ANN may not allow the data owner to share data with a cloud provider.

Generally, Trusted Execution Environments (TEEs) are a promising solution in application scenarios where arbitrary computation on sensitive data is outsourced to a remote party that is not trusted with cleartext access to the data.

Nevertheless, TEEs are ill-suited for ANNs because of the resource constraints that current hardware architectures impose on TEEs. For example, Intel SGX - arguably the most popular TEE for workstations - imposes a limit on the memory available to a TEE, thereby preventing resource-demanding computations such as ANN training. Further, TEEs like Intel SGX run on the main processor and, therefore, cannot leverage dedicated hardware architectures (e.g., FPGAs or GPUs) that can sensibly speedup ANN training.

Alternatively, Homomorphic Encryption (HE) allows a party to compute over encrypted data and could be used to train ANNs in the cloud. Nevertheless, the complexity of HE when evaluating functions such as ANNs over encrypted data result in an intolerable performance overhead if compared to the same task on cleartext data. Further, HE is not suited to compute many of the activation functions used in ANNs; prior art resorts to specific activation functions or to polynomial approximation which provide sub-optimal results.

Florian Tramèr et al., "Slalom: Fast, Verifiable and Private Execution of Neural Networks in Trusted Hardware", 2018 discloses a scheme for verifiable and optionally private execution of deep neural networks (DNNs) in a trusted execution environment (TEE). The document teaches to partition the computation of a DNN between a trusted process running inside a TEE and an untrusted but faster co-processor. In particular, the document proposes to outsource the computation of linear layers of the DNN to the untrusted co-processor and to verify the integrity of the outsourced computations using Freivalds' algorithm, while preserving confidentiality by quantizing inputs and weights and masking them with a pseudorandom stream. The proposed techniques are described in the context of executing already trained DNN models (inference) with integrity and privacy guarantees.

It is an object of the present invention to improve and further develop a method and a host processing system of the initially described type for training an artificial neural network in such a way that a high level of accuracy of the ANN training is achieved, while at the same time the privacy of the data used to train the ANN is preserved.

In accordance with the invention, the aforementioned object is accomplished by a computer-implemented method of training an artificial neural network, ANN, on a remote host, the method comprising: computing, by a trusted process deployed in a trusted execution environment, TEE, on the remote host, a key-pair for a homomorphic encryption scheme and sharing, by the trusted process, the public key, PK, of the key-pair with an untrusted process deployed on the remote host; and splitting the training procedure of the ANN between the untrusted process and the trusted process, wherein the untrusted process computes encrypted inputs to the neurons of the ANN by means of the homomorphic encryption scheme, while the trusted process computes the outputs of the neurons based on the respective encrypted neuron inputs as provided by the untrusted process. The method further comprises a feed-forwarding phase, including the steps of: sending, by the trusted process for each layer of the ANN, the output of the neurons of a respective layer, encrypted with the public key, PK, to the untrusted process; and computing, by the untrusted process, an input for the respective subsequent layer of the ANN by executing homomorphic matrix multiplication of the respective encrypted weight matrix and the encrypted output as received from the trusted process. Furthermore, the method comprises a back-propagation phase for minimizing the cost function of the ANN by adjusting the weights, including the steps of: computing, by the trusted process for each layer of the ANN, a gradient of the weights; and encrypting the gradients with the public key, PK, and sending the encrypted gradients to the untrusted process, wherein, at the end of the propagation phase, the untrusted process holds, for each layer of the ANN, a gradient weight matrix, encrypted with the public key, PK.

According to the invention the aforementioned object is also accomplished by a host processing system for remote training of an artificial neural network according to claim 11 and by a non-transitory computer readable medium for remote training of an artificial neural network according to claim 12.

According to the invention it has first been recognized that the above mentioned objective can be accomplished by enabling training an artificial neural network on a remote host, while keeping the network model and the train data hidden from any software running on the host. According to embodiment of the invention, this is achieved by carefully combining trusted execution environments and homomorphic encryption. By using a homomorphic encryption, embodiments of the invention achieve managing ANN training data in a privacy preserving way, without having to introduce mathematical approximations into the training process, for instance an approximation of the activation function with polynomials.

More specifically, embodiments of the invention leverage TEE and quadratic homomorphic encryption to train ANNs on hosts where no software is trusted with cleartext access to data - be it the training data or the ANN parameters. The main idea is to split the computation between an untrusted system component that handles encrypted data, and a trusted TEE that computes on cleartext data. Previous work (for reference, see F. Tramèr, D. Boneh: "Slalom: Fast, Verifiable and Private Execution of Neural Networks", in Trusted Hardware, ICLR 2019) has explored a design paradigm to split ANN computation between a trusted processor and an untrusted one, but it is limited to inference and does not address training of the network.

According to the invention, the method comprises a feed-forwarding phase, in which the trusted process sends, for each layer of the ANN, the output of the neurons of a respective layer, encrypted with the public key, PK, to the untrusted process. On the other hand, the untrusted process is configured to compute an input for the respective subsequent layer of the ANN by executing homomorphic matrix multiplication of the respective encrypted weight matrix and the encrypted output as received from the trusted process. In an embodiment, homomorphic matrix multiplication may be achieved by means of homomorphic addition and multiplication. According to the invention, the method further comprises a back-propagation phase for minimizing the cost function of the ANN by adjusting the weights. In the back-propagation phase, the trusted process computes, for each layer of the ANN, a gradient of the weights. Furthermore, the trusted process encrypts the gradients with the public key, PK, and sends the encrypted gradients to the untrusted process. At the end of the propagation phase, the untrusted process holds, for each layer of the ANN, a gradient weight matrix, encrypted with the public key, PK.

According to an embodiment of the invention, it may be provided that the homomorphic encryption scheme is parametrized to compute quadratic functions. In this context, it has been recognized that such homomorphic encryption scheme performs significantly better than those schemes parametrized to compute functions of degree greater than two.

According to an embodiment of the invention, the trusted process running in the TEE may be configured to encrypt, by using the public key PK of the key-pair computed for the homomorphic encryption scheme, the inputs and the parameters, including the weights, of the ANN. The trusted process may then transmit the encrypted inputs and parameters to the untrusted process. Furthermore, the trusted process may be configured to compute, by cooperating with the untrusted process, the output of the ANN and the gradient of the weights, given the encrypted inputs and the encrypted weights.

According to an embodiment of the invention, the method may comprise an initialization phase, in which the trusted process computes random weight matrices for all layers of the ANN, encrypts the random weight matrices with the public key, PK, and sends the encrypted weight matrices to the untrusted process.

According to an embodiment, the feed-forwarding phase may include the additional steps of decrypting, by the trusted process, the input for the respective subsequent layer of the ANN as received from the untrusted process, and computing, by the trusted process, an output of the respective subsequent layer by computing on the decrypted input the respective activation function. For the last layer of the ANN, the trusted process may define the calculated output as the output vector of the ANN. Based on this output vector and the correct output vector, the trusted process may calculate the cost function. Consequently, at the end of the feed-forwarding phase, the TEE holds input and output vectors for each layer of the ANN as well as the cost function.

According to an embodiment of the invention, the method may further comprise a weights-updating phase, in which the untrusted process computes, based on the encrypted weight matrices and gradient weight matrices, updated weight matrices by executing, for each layer of the ANN, homomorphic matrix addition of the respective encrypted weight matrix and the respective encrypted gradient weight matrix.

According to an embodiment, after the initialization phase, the method may be configured to iterate the feed-forwarding phase, the back-propagation phase and the weights-updating phase over each sample of an ANN training data set. At each iteration, a different pair of the training data (consisting of an input vector and a corresponding correct output vector) may be considered.

According to an embodiment of the invention, the method may comprise a weight refreshing procedure, in which the untrusted process sends the encrypted weight matrices of each layer of the ANN to the trusted process and discards them afterwards. On the other hand, the trust process may decrypt the encrypted weight matrices received from the untrusted process to obtain the plaintext weight matrices and may encrypt each plaintext weight matrix in a fresh ciphertext. The trusted process may then send the refreshed encrypted weight matrices to the untrusted process.

According to an embodiment, the weight refreshing procedure may be executed in case the number of weight updates reaches an upper bound as defined by the parameters of the homomorphic encryption scheme.

According to an embodiment, the ANN training data are provided, encrypted under the public key, PK, of the trusted process and, thus, in a privacy-preserving fashion, by a plurality of different data owners. According to an embodiment, the trained model may be provided to a model owner, which may be a different entity or the same entity as any of the data owners.

There are several ways how to design and further develop the teaching of the present invention in an advantageous way. To this end it is to be referred to the dependent claims on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing
- Fig. 1: is a schematic view providing an overview of a feed-forwarding phase used both during training and during interference in accordance with an embodiment of the present invention, and
- Fig. 2: is a schematic view illustrating a system model for training an artificial neural network on a remote computing platform in accordance with an embodiment of the present invention.

The present invention enables training an artificial neural network on a remote computing platform, while keeping the network model and the training data hidden from any software running on the platform. This is achieved by combining trusted execution environments, TEEs, and homomorphic encryption.

According to an embodiment, the present invention provides a method for private inference and training of an Artificial Neural Network, wherein the method may comprise the steps of
1) Deploying a trusted process in a trusted execution environment and an untrusted process on the same host.
2) Computing, by the trusted process a key-pair for a quadratic homomorphic encryption scheme and sending, by the trusted process, the public key to the untrusted process.
3) Encrypting, by the trusted process, the inputs and the parameters, including the weights, of the artificial neural networks.
4) Computing, by the trusted process cooperating with the untrusted process, the output of the neural networks and the gradient of the weights, given the encrypted inputs and the encrypted weights. In particular, the untrusted process computes encrypted neuron input and the trusted processors uses such input to compute the neuron outputs.

Before providing details of the present invention, the fundamental functionalities and the mathematical principles of both homomorphic encryption schemes and artificial neural networks will be described, although, in general, it is assumed that those skilled in the art are sufficiently familiar with these aspects.

### Homomorphic Encryption

Homomorphic Encryption (HE) enables computation over encrypted data by defining two main operation denoted as homomorphic multiplication "⊗" and homomorphic addition "⊕". Let {x} denote a ciphertext encrypting value x (under a specified public key). Thus, {a}⊗{b} = {a*b} and {a}⊕{b} = {a+b}.

A quadratic homomorphic encryption scheme is one that allows arbitrary additions and one multiplication (followed by arbitrary additions) on encrypted data. This property allows the evaluation of multi-variate polynomials of degree 2 on encrypted values. Quadratic homomorphic encryption schemes are available in literature.

Some of these schemes are obtained either by extending techniques typically used in the context of linearly-homomorphic encryption (as described, e.g., in D. Catalano, D. Fiore: "Boosting Linearly-Homomorphic Encryption to Evaluate Degree-2 Functions on Encrypted Data", ACM CCS 2015) or by scaling down a fully homomorphic encryption scheme (as described, e.g., in M. Albrecht et al.: "Homomorphic Encryption Security Standard", Technical report, https://homomorphicencryption.org/ ). It should be noted that the homomorphic encryption scheme described in the latter citation is one where the number of additions and multiplications is not bounded.

It is known as well document SLALOM: FAST, VERIFIABLE AND PRIVATE EXECUTION OF NEURAL NETWORKS IN TRUSTED HARDWARE, from Florian Tramèr, Dan Boneh, published 27-02-2019.

It is noted, however, that all fully homomorphic encryption schemes add a so-called "noise" during plaintext encryption. This noise grows every time a ciphertext is used in a computation, and if the noise exceeds a pre-defined threshold, decryption fails. The noise threshold is determined by the HE parameters and it has a direct impact on the length of the ciphertexts and the complexity of the homomorphic operations. In a nutshell, performance of an homomorphic encryption scheme parametrized to compute quadratic functions are appreciably better than those of the same scheme parametrized to compute functions of degree greater than two.

### Artificial Neural Networks

In general and in particular as understood in the context of the present disclosure, an Artificial Neural Network (hereinafter sometimes briefly referred to as ANN) maps an input vector x to an output vector y through a series of transformations partitioned in L+1 layers, each made of several neurons. The first layer, denoted as layer 0, corresponds to the input and has one neuron per element of x; the last layer, denoted as layer L, corresponds to the output and has one neuron per element of y. The input to each neuron, in any layer but the first layer, is a weighted sum of the output of the neurons in the previous layer. Let Oᵢ^{[ℓ]} denote the output of the i-th neuron at layer ℓ, then the input to the j-th neuron at layer ℓ+1 is ${{z}_{j}}^{\left[l+1\right]} = {{Σ}_{i = 1}}^{n \left[l\right]} {{w}_{ij}}^{\left[l\right]} {{o}_{i}}^{\left[l\right]}$ where n^{[ℓ]} is the number of neurons at layer ℓ. The output of each neuron, in any layer but the first layer, is computed by applying a so-called activation function to its input. Hence oᵢ^{[ℓ]}=f^{[ℓ]}(zᵢ^{[ℓ]}) where f^{[ℓ]} is the activation function for the neurons at layer ℓ.

As such, the output of the network over a specific input x is computed as $y = {f}^{\left[L\right]} \left({W}^{\left[L-1\right]}⋅{f}^{\left[L-1\right]}\left({W}^{\left[L-1\right]}…⋅{f}^{\left[1\right]}\left({W}^{\left[1\right]}⋅x\right)…\right)\right) ,$ where **W**^{[ℓ]} is the matrix of weights that determine the inputs of neurons at layer ℓ+1, given the outputs of neurons at layer ℓ, and "·" denotes matrix multiplication.

Training an ANN requires a set of pairs {**x**ᵢ,**exp**ᵢ}_{i=1,...,n}, where n denotes the number of training samples, and where for each input **x**ᵢ, the corresponding **exp**ᵢ represents the expected value to be output by the network. Initially, the weights matrices are initialized with random values. Given {**x**ᵢ,**exp**ᵢ}_{i=1,...,n} a "feed-forward" phase computes the output of the network, say **y**ᵢ. A "back-propagation" evaluates the network error by comparing the network output **y**ᵢ with the expected output **exp**ᵢ, and determines how to adjust weights, so to minimize the error.

During the feed-forward phase, the output of each neuron is computed layer by layer. That is, let **o**^{[0]}**=x,** then the output of neurons at layer 1 is computed as **o**^{[1]}=**f**^{[1]}(**W**^{[1]}·**o**^{[0]}); next, the output of neurons at layer 2 is computed as **o**^{[2]}=**f**^{[2]}(**W**^{[2]}·**o**^{[1]}), and so forth, until computing the output of neurons in the last layer as **y**=**f**^{[L]}(**W**^{[L]}·**o**^{[L-1]}).

Given an input **x,** the corresponding network output y, and the correct output exp, a cost function **C(exp,y)** provides a quantitative measure of the error of the output produced by the network on input x. A cost function could also be defined over n' pairs {**exp**ᵢ**,y**ᵢ}_{i=1,...,n'}.

Back-propagation enables minimizing the cost function C(exp,y), by adjusting the weights in {**W**^{[ℓ]}}_{ℓ=1,...,L}.

Let (**f**^{[ℓ]})' denote the vector of derivatives of the activation function at layer ℓ, computed at **z**^{[ℓ]} = **W**^{[ℓ]}·**o**^{[ℓ-1]}. Also, let **δ**^{[L]} = (**f**^{[L]})' * C(exp,y) and define **δ**^{[ℓ-1]} = (**f**^{[ℓ-1]})' * (**W**^{[ℓ]})^{T}·**δ**^{[ℓ]} for ℓ<L. It should be noted that **δ**^{[ℓ]} is a vector that has as many elements as the number of neurons at layer ℓ, and that "*" denotes element-wise multiplication.

The gradient of the weights at layer ℓ can be computed as Δ(**W**^{[ℓ]}) = **δ**^{[ℓ]}*(**o**^{[ℓ-1]})^{T}. Hence, the new weight matrix for layer f is computed as **W**^{[ℓ]} - Δ(**W**^{[ℓ]}).

According to an embodiment of the invention, the ANN training may be performed by splitting the training process into a trusted process T running in a TEE implemented on a computing platform, and an untrusted process U running outside of the TEE (e.g., a regular application) on the same computing platform.

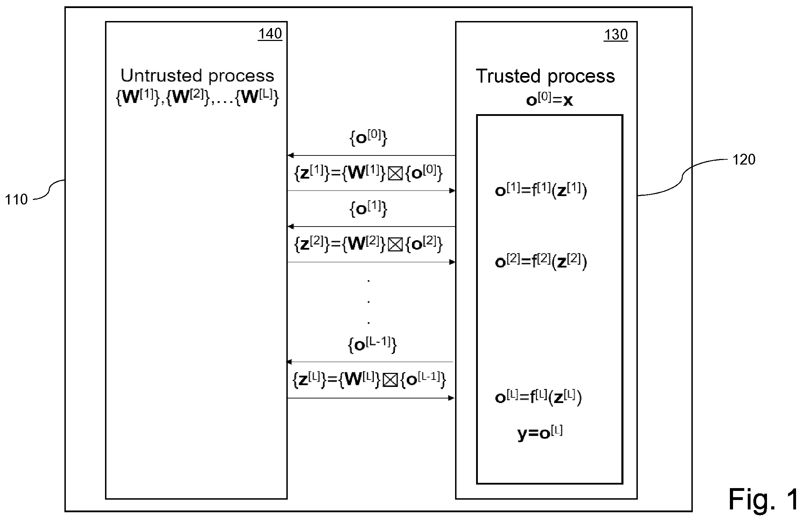

Fig. 1 schematically illustrates the execution of a feed-forwarding procedure according to an embodiment of the invention. Specifically, Fig. 1 shows a remote host or computing platform 110, where the trusted process T, assigned reference number 130 in Fig. 1, runs in a trusted execution environment, TEE 120, deployed on the remote computing platform 110. In addition, the untrusted process U, assigned reference number 140 in Fig. 1, runs on the same computing platform 110, however, outside of the TEE 120.

The TEE 120 may be configured to generate a key pair PK, SK (public key, secret key) for a quadratic homomorphic encryption scheme and shares PK with U. With regard to the quadratic homomorphic encryption scheme, the encryption of x under a specific public key is denoted with {x}, and "⊕" and "⊗" denote homomorphic addition and multiplication, respectively. The notation {a} is used to denote message "a" encrypted with public key PK; all encryption operation use PK as the public encryption key and all decryption operations use SK as the private decryption key. Also, the trusted process T holds data for training of the ANN, e.g., a set of pairs (**x**ᵢ,**exp**ᵢ), for i = 1,...,n.

According to an embodiment of the invention, the method for training the ANN includes an initialization step. In this regard, it may be provided that the trusted process T computes random weight matrices **W**^{[1]},...,**W**^{[L]}, encrypts them with the secret key SK generated for the quadratic homomorphic encryption scheme, and sends {**W**^{[1]}},...,{**W**^{[L]}} to the untrusted process U. Those encrypted matrices may be used by U in the remaining procedures.

According to an embodiment, after initialization, network training may be performed by iterating through three procedures, namely (i) feed-forwarding, (ii) back-propagation, and (iii) weight-updating, over each pair (**x**ᵢ,**exp**ᵢ), for i=1,...,n. At each iteration, a different pair **{x,exp}** is considered, wherein **x** is denoted as **o**^{[0]}. Hereinafter, the three procedures will be described in more detail.

According to an embodiment of the invention, the feed-forwarding procedure may include the following steps that are repeated for each of the layers ℓ = 1,...,L of the ANN, as shown in Fig. 1:
1. T sends {**o**^{[ℓ-1]}} to U
2. U computes {**z**^{[ℓ]}} = {**W**^{[ℓ]}} 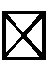 {**o**^{[ℓ-1]}} and sends it to T. Note that " 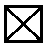 " denotes homomorphic matrix multiplication and it is achieved by means of homomorphic addition and multiplication.
3. T decrypts {**z**^{[ℓ]}} and computes **o**^{[ℓ]} = **f**^{[ℓ]}(**z**^{[ℓ]})
4. If f = L, then T sets **y** = **o**^{[ℓ]}, computes C**(exp,y)** and stops.

Accordingly, at the end of the feed-forwarding phase, the trusted process 130 running on TEE 120 holds **x** = **o**^{[0]}, **z**^{[1]}, **o**^{[1]},... , **z**^{[L-1]}, **o**^{[L-1]}, **z**^{[L]}, **o**^{[L]} = **y** and C(exp,y).

Fig. 1 provides an overview of the feed-forwarding phase, as described above. According to embodiments, the illustrated feed-forwarding procedure is used both during training and during inference. Fig. 1 also shows that the TEE 120 has to decrypt, process and re-encrypt a number of inputs that amount to the number of neurons in the network. The performance gain, compared to a solution that runs the whole ANN training with an untrusted processor using a fully homomorphic encryption scheme, is given by the fact that encryption/decryption complexity is negligible compared to the complexity of homomorphic operations (as has been demonstrated in A. Qaisar et al.: "Implementation and Performance Evaluation of RNS Variants of the BFV Homomorphic Encryption Scheme", in IEEE Transactions on Emerging Topics in Computing, doi: 10.1109/TETC.2019.2902799).

According to an embodiment of the invention, the back-propagation procedure may include the following steps:
First, T computes **δ**^{[L]} = f'(**z**^{[L]})*C(**exp**,**y**) and Δ(**W**^{[L]}) = **δ**^{[L]}*(**o**^{[ℓ-1]})^{T}; it encrypts the values using the secret key SK and sends the encrypted values {**δ**^{[L]}}, {Δ(**W**^{[L]})} to U.

Next, the following steps may be repeated for each of the layers ℓ = 1,...,L of the ANN:
1. U computes {**λ**^{[ℓ]}} = {**W**^{[ℓ]}}^{T} 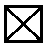 {**δ**^{[ℓ+1]}} and sends it to T
2. T decrypts {**λ**^{[ℓ]}}, and computes **δ**^{[ℓ]} = f'(**z**^{[ℓ]})***λ**^{[ℓ]} and Δ(**W**^{[ℓ]}) = **δ**^{[ℓ]l}*(**o**^{[ℓ-1]})^{T}; then, it sends {**δ**^{[ℓ]}}, {Δ(**W**^{[ℓ]})} to U

Accordingly, at the end of the back-propagation phase, U holds {Δ(**W**^{[1]})},..., {Δ(**W**^{[L]})}.

According to an embodiment of the invention, the weight-updating procedure may include the following steps:

Given weight matrices {**W**^{[1]}},...,{**W**^{[L]}} and the gradients {Δ(**W**^{[1]} )},...,{Δ(**W**^{[L]} )}, U may perform the following step for each of the layers ℓ = 1,...,L of the ANN:
1. $\left\{{W}^{\left[l\right]}\right\} = \left\{{W}^{\left[l\right]}\right\} ⊕ \left\{Δ\left({W}^{\left[l\right]}\right)\right\}$

According to an embodiment of the invention, network training may also include a weight refresh procedure. In case the quadratic homomorphic encryption scheme is instantiated with a generic homomorphic encryption scheme, the number of homomorphic additions, and thus, the number of weight updates is upper-bounded by the parameters of the scheme. Therefore, once this bound is reached, the weight matrices may be refreshed by executing, repeated for each of the layers ℓ = 1,...,L of the ANN, the steps as follows:
1. U sends {**W**^{[ℓ]}} to T and discards it
2. T decrypts {**W**^{[ℓ]}} to obtain **W**^{[ℓ]} and encrypts the plaintext matrix in a fresh ciphertext {**W**^{[ℓ]}}; the latter is sent to U.

Consequently, at the end of the weight refresh phase, U holds fresh weight matrices {**W**^{[1]}},...,{**W**^{[L]}}.

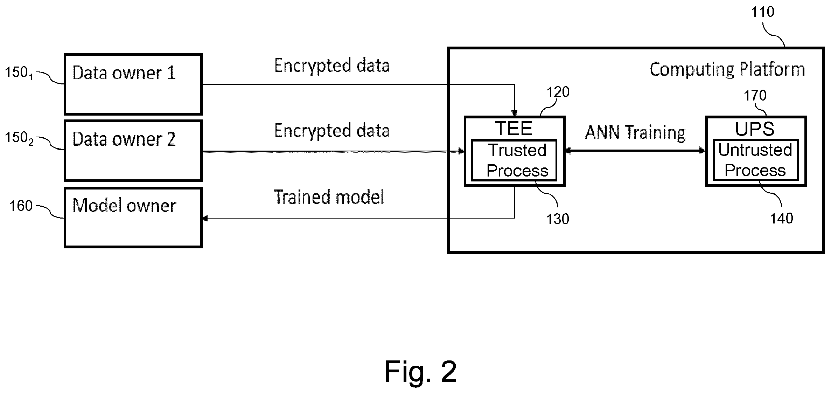

Fig. 2, in which like components and functions are denoted with like reference numbers as in Fig. 1, schematically illustrates an embodiment of the present invention, where a method of training an artificial neural network, ANN, is executed in a system where two data owners 150₁, 150₂ encrypt their data under the public key of a trusted process 130 running in a TEE 120 on a remote computing platform 110. The latter carries out the training of the ANN, by cooperating with an untrusted process 140 running on an untrusted processing system, UPS 170, implemented on the computing platform 110 as explained in connection with Fig. 1, and provides the trained model to a model owner 160. It should be noted that the number of data owners is not restricted to 2, i.e. the trusted process 130 running in the TEE 120 may be configured to process encrypted data received from a plurality of data owners. Furthermore, it should be noted that a data owner 150₁, 150₂ may also act as model owner 160 and receive the trained model.

According to embodiments of the invention, the remote host including the TEE 120 and UPS 170, e.g. the computing platform 110 shown in Fig. 2, should be understood to be a processing system in accordance with embodiments of the present invention. As will be appreciated by those skilled in the art, the processing system may include one or more processors, such as a central processing unit (CPU) of a computing device or a distributed processor system. The processors execute processor-executable instructions for performing the functions and methods described herein. In embodiments, the processor executable instructions are locally stored or remotely stored and accessed from a non-transitory computer readable medium, which may be a hard drive, cloud storage, flash drive, etc. A read-only memory may include processor-executable instructions for initializing the processors, while a random-access memory (RAM) may be the main memory for loading and processing instructions executed by the processors. A network interface may connect to a wired network or cellular network and to a local area network or wide area network, such as the Internet, and may be used to receive and/or transmit data, including **ANN** training datasets such as datasets representing one or more images. The processing system may be embodied in smartphones, tablets, servers or other types of computer devices. The processing system, which can be connected alone or with other devices to a bus, can be used to implement the protocols, devices, mechanisms, systems and methods described herein.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A computer-implemented method of training an artificial neural network, ANN, on a remote host (110), the method comprising:
computing, by a trusted process (130) deployed in a trusted execution environment, TEE (120), on the remote host (110), a key-pair for a homomorphic encryption scheme and sharing, by the trusted process (130), the public key, PK, of the key-pair with an untrusted process (140) deployed on the remote host (110); and
splitting the training procedure of the ANN between the untrusted process (140) and the trusted process (130), wherein the untrusted process (140) computes encrypted inputs to the neurons of the ANN by means of the homomorphic encryption scheme, while the trusted process (130) computes the outputs of the neurons based on the respective encrypted neuron inputs as provided by the untrusted process (140),
the method further comprising a feed-forwarding phase, including the steps of:
sending, by the trusted process (130) for each layer of the ANN, the output of the neurons of a respective layer, encrypted with the public key, PK, to the untrusted process (140); and **characterized in**
computing, by the untrusted process (140), an input for the respective subsequent layer of the ANN by executing homomorphic matrix multiplication of the respective encrypted weight matrix and the encrypted output as received from the trusted process (130),
the method further comprising a back-propagation phase for minimizing the cost function of the ANN by adjusting the weights, including the steps of:
computing, by the trusted process (130) for each layer of the ANN, a gradient of the weights; and
encrypting the gradients with the public key, PK, and sending the encrypted gradients to the untrusted process (140),
wherein, at the end of the propagation phase, the untrusted process (140) holds, for each layer of the ANN, a gradient weight matrix, encrypted with the public key, PK.

2. The method according to claim 1, wherein the homomorphic encryption scheme is parametrized to compute quadratic functions.

3. The method according to claim 1 or 2, further comprising:
encrypting, by the trusted process (130), the inputs and the parameters, including the weights, of the ANN with the public key, PK;
sending the encrypted inputs and parameters to the untrusted process (140); and
computing, by the trusted process (130) cooperating with the untrusted process (140), the output of the ANN and the gradient of the weights, given the encrypted inputs and the encrypted weights.

4. The method according to any of claims 1 to 3, further comprising an initialization phase, including the steps of:
computing, by the trusted process (130), random weight matrices for all layers of the ANN, encrypting the random weight matrices with the public key, PK, and sending the encrypted weight matrices to the untrusted process (140).

5. The method according to claim 4, further comprising:
decrypting, by the trusted process (130), the input for the respective subsequent layer of the ANN as received from the untrusted process (140); and
computing, by the trusted process (130), an output of the respective subsequent layer by computing on the decrypted input the respective activation function.

6. The method according to any of claims 1 to 5, further comprising a weights-updating phase, including the steps of:
computing, by the untrusted process (140), based on the encrypted weight matrices and gradient weight matrices, updated weight matrices by executing, for each layer of the ANN, homomorphic matrix addition of the respective encrypted weight matrix and the respective encrypted gradient weight matrix.

7. The method according to any of claims 1 to 6, further comprising:
iterating the feed-forwarding phase, the back-propagation phase and the weights-updating phase over each sample of an ANN training data set.

8. The method according to any of claims 1 to 7, further comprising a weight refreshing procedure, including the steps of:
sending, by the untrusted process (140), the encrypted weight matrices of each layer of the ANN to the trusted process (130) and discarding them afterwards;
decrypting, by the trusted process (130), the received encrypted weight matrices to obtain the plaintext weight matrices and encrypting each plaintext weight matrix in a fresh ciphertext; and
sending, by the trusted process (130), the refreshed encrypted weight matrices to the untrusted process (140).

9. The method according to claim 8, wherein the weight refreshing procedure is executed in case the number of weight updates reaches an upper bound as defined by the parameters of the homomorphic encryption scheme.

10. The method according to any of claims 1 to 9, wherein the ANN training data are provided, encrypted under the public key, PK, of the trusted process (130), by a plurality of different data owners (150).

11. A host processing system for remote training of an artificial neural network, in particular for execution of a method according to any of claims 1 to 10, the host processing system (110) comprising a trusted execution environment, TEE (120), and an untrusted processing system, UPS (170), and being configured to:
run a trusted process (130) deployed in the TEE (120) that computes a key-pair for a homomorphic encryption scheme and share the public key, PK, of the key-pair with an untrusted process (140) running on the UPS (170);
split the training procedure of the ANN between the untrusted process (140) and the trusted process (130), wherein the untrusted process (140) is configured to compute encrypted inputs to the neurons of the ANN by means of the homomorphic encryption scheme, while the trusted process (130) is configured to the outputs of the neurons based on the respective encrypted neuron inputs as provided by the untrusted process (140),
further perform a feed-forwarding phase, including the steps of:
sending, by the trusted process (130) for each layer of the ANN, the output of the neurons of a respective layer, encrypted with the public key, PK, to the untrusted process (140); and **characterized in**
computing, by the untrusted process (140), an input for the respective subsequent layer of the ANN by executing homomorphic matrix multiplication of the respective encrypted weight matrix and the encrypted output as received from the trusted process (130),
further perform a back-propagation phase for minimizing the cost function of the ANN by adjusting the weights, including the steps of:
computing, by the trusted process (130) for each layer of the ANN, a gradient of the weights; and
encrypting the gradients with the public key, PK, and sending the encrypted gradients to the untrusted process (140),
wherein, at the end of the propagation phase, the untrusted process (140) holds, for each layer of the ANN, a gradient weight matrix, encrypted with the public key, PK.

12. A non-transitory computer readable medium for remote training of an artificial neural network with a host processing system (110) comprising a trusted execution environment, TEE (120), and an untrusted processing system, UPS (170), the medium comprising program code for configuring the host processing system (110) to:
run a trusted process (130) deployed in the TEE (120) that computes a key-pair for a homomorphic encryption scheme and share the public key, PK, of the key-pair with an untrusted process (140) running on the UPS (170);
split the training procedure of the ANN between the untrusted process (140) and the trusted process (130), wherein the untrusted process (140) is configured to compute encrypted inputs to the neurons of the ANN by means of the homomorphic encryption scheme, while the trusted process (130) is configured to the outputs of the neurons based on the respective encrypted neuron inputs as provided by the untrusted process (140),
further perform a feed-forwarding phase, including the steps of:
sending, by the trusted process (130) for each layer of the ANN, the output of the neurons of a respective layer, encrypted with the public key, PK, to the untrusted process (140); and **characterized in**
computing, by the untrusted process (140), an input for the respective subsequent layer of the ANN by executing homomorphic matrix multiplication of the respective encrypted weight matrix and the encrypted output as received from the trusted process (130),
further perform a back-propagation phase for minimizing the cost function of the ANN by adjusting the weights, including the steps of:
computing, by the trusted process (130) for each layer of the ANN, a gradient of the weights; and
encrypting the gradients with the public key, PK, and sending the encrypted gradients to the untrusted process (140),
wherein, at the end of the propagation phase, the untrusted process (140) holds, for each layer of the ANN, a gradient weight matrix, encrypted with the public key, PK.

## Patentansprüche

1. Computerimplementiertes Verfahren zum Trainieren eines künstlichen neuronalen Netzes (ANN) auf einem Remote-Host (110), wobei das Verfahren Folgendes umfasst:
Berechnen, durch einen vertrauenswürdigen Prozess (130), der in einer vertrauenswürdigen Ausführungsumgebung, TEE (120) bereitgestellt wird, auf dem Remote-Host (110), eines Schlüsselpaares für ein homomorphes Verschlüsselungsschema und Teilen des öffentlichen Schlüssels (PK) des Schlüsselpaares, durch den vertrauenswürdigen Prozess (130), mit einem nicht vertrauenswürdigen Prozess (140), der auf dem Remote-Host (110) bereitgestellt ist; und
Aufteilen der Trainingsprozedur des ANN zwischen dem nicht vertrauenswürdigen Prozess (140) und dem vertrauenswürdigen Prozess (130), wobei der nicht vertrauenswürdige Prozess (140) verschlüsselte Eingaben für die Neuronen des ANN mittels des homomorphen Verschlüsselungsschemas berechnet, während der vertrauenswürdige Prozess (130) die Ausgaben der Neuronen auf der Grundlage der jeweiligen verschlüsselten Neuroneneingaben berechnet, die vom nicht vertrauenswürdigen Prozess (140) bereitgestellt werden;
wobei das Verfahren ferner eine Feed-Forward-Phase umfasst, die folgende Schritte einschließt:
Senden, durch den vertrauenswürdigen Prozess (130), für jede Schicht des ANN, der Ausgabe der Neuronen einer jeweiligen Schicht, verschlüsselt mit dem öffentlichen Schlüssel PK, an den nicht vertrauenswürdigen Prozess (140); und **gekennzeichnet durch**
das Berechnen, **durch** den nicht vertrauenswürdigen Prozess (140), einer Eingabe für die jeweilige nachfolgende Schicht des ANN, indem er eine homomorphe Matrixmultiplikation der jeweiligen verschlüsselten Gewichtsmatrix und der verschlüsselten Ausgabe durchführt, wie sie vom vertrauenswürdigen Prozess (130) empfangen wurde,
wobei das Verfahren ferner eine Backpropagation-Phase zur Minimierung der Kostenfunktion des ANN **durch** Anpassung der Gewichte umfasst, einschließlich der folgenden Schritte:
Berechnen, **durch** den vertrauenswürdigen Prozess (130), für jede Schicht des ANN, eines Gradienten der Gewichte; und
Verschlüsseln der Gradienten mit dem öffentlichen Schlüssel PK und Senden der verschlüsselten Gradienten an den nicht vertrauenswürdigen Prozess (140),
wobei am Ende der Propagationsphase der nicht vertrauenswürdige Prozess (140) für jede Schicht des ANN eine mit dem öffentlichen Schlüssel PK verschlüsselte Gradienten-Gewichtsmatrix hält.

2. Verfahren nach Anspruch 1, wobei das homomorphe Verschlüsselungsschema zur Berechnung quadratischer Funktionen parametrisiert ist.

3. Verfahren nach Anspruch 1 oder 2, ferner umfassend:
Verschlüsseln, durch den vertrauenswürdigen Prozess (130), der Eingaben und der Parameter, einschließlich der Gewichte, des ANN mit dem öffentlichen Schlüssel PK;
Senden der verschlüsselten Eingaben und Parameter an den nicht vertrauenswürdigen Prozess (140);
und
Berechnen, durch den vertrauenswürdigen Prozess (130) in Zusammenarbeit mit dem nicht vertrauenswürdigen Prozess (140), der Ausgabe des ANN und des Gradienten der Gewichte basierend auf den verschlüsselten Eingaben und den verschlüsselten Gewichten.

4. Verfahren nach einem der Ansprüche 1 bis 3, das ferner eine Initialisierungsphase umfasst, die die folgenden Schritte einschließt:
Berechnen, durch den vertrauenswürdigen Prozess (130), von Zufallsgewichtsmatrizen für alle Schichten des ANN, Verschlüsseln der Zufallsgewichtsmatrizen mit dem öffentlichen Schlüssel PK und Senden der verschlüsselten Gewichtsmatrizen an den nicht vertrauenswürdigen Prozess (140).

5. Verfahren nach Anspruch 4, ferner umfassend:
Entschlüsseln, durch den vertrauenswürdigen Prozess (130), der Eingabe für die jeweilige nachfolgende Schicht des ANN, wie sie vom nicht vertrauenswürdigen Prozess (140) empfangen wurde; und
Berechnen, durch den vertrauenswürdigen Prozess (130), einer Ausgabe der jeweiligen nachfolgenden Schicht durch Berechnen der jeweiligen Aktivierungsfunktion auf die entschlüsselte Eingabe.

6. Verfahren nach einem der Ansprüche 1 bis 5, ferner umfassend eine GewichtsAktualisierungsphase, die die folgenden Schritte einschließt:
Berechnen, durch den nicht vertrauenswürdigen Prozess (140), auf der Grundlage der verschlüsselten Gewichtsmatrizen und Gradienten-Gewichtsmatrizen, aktualisierter Gewichtsmatrizen durch Ausführung einer homomorphen Matrixaddition der jeweiligen verschlüsselten Gewichtsmatrix und der jeweiligen verschlüsselten Gradienten-Gewichtsmatrix für jede Schicht des ANN.

7. Verfahren nach einem der Ansprüche 1 bis 6, ferner umfassend:
Iterieren der Feed-Forward-Phase, der Backpropagation-Phase und der Gewichtsaktualisierungsphase über jedes Muster eines ANN-Trainingsdatensatzes.

8. Verfahren nach einem der Ansprüche 1 bis 7, das ferner eine Gewichtsauffrischungs-Prozedur umfasst, die die folgenden Schritte einschließt:
Senden der verschlüsselten Gewichtsmatrizen jeder Schicht des ANN durch den nicht vertrauenswürdigen Prozess (140) an den vertrauenswürdigen Prozess (130) und anschließendes Verwerfen derselben;
Entschlüsseln der empfangenen verschlüsselten Gewichtsmatrizen durch den vertrauenswürdigen Prozess (130), um die Klartext-Gewichtsmatrizen zu erhalten, und Verschlüsseln jeder Klartext-Gewichtsmatrix in einen neuen Chiffretext; und
Senden der aufgefrischten verschlüsselten Gewichtsmatrizen durch den vertrauenswürdigen Prozess (130) an den nicht vertrauenswürdigen Prozess (140).

9. Verfahren nach Anspruch 8, wobei die Gewichtsauffrischungs-Prozedur dann ausgeführt wird, wenn die Anzahl der Gewichtsaktualisierungen eine Obergrenze erreicht, die durch die Parameter des homomorphen Verschlüsselungsschemas definiert ist.

10. Verfahren nach einem der Ansprüche 1 bis 9, wobei die ANN-Trainingsdaten, verschlüsselt unter Verwendung des öffentlichen Schlüssels PK des vertrauenswürdigen Prozesses (130) von einer Vielzahl verschiedener Dateneigentümer (150) bereitgestellt werden.

11. Host-Verarbeitungssystem zum Ferntraining eines künstlichen neuronalen Netzes, insbesondere zur Ausführung eines Verfahrens nach einem der Ansprüche 1 bis 10, wobei das Host-Verarbeitungssystem (110) eine vertrauenswürdige Ausführungsumgebung, TEE (120), und ein nicht vertrauenswürdiges Verarbeitungssystem, UPS (170), umfasst und konfiguriert ist, zum:
Ausführen eines in der TEE (120) bereitgestellten vertrauenswürdigen Prozess (130), der ein Schlüsselpaar für ein homomorphes Verschlüsselungsschema berechnet, und Teilen des öffentlichen Schlüssels (PK) des Schlüsselpaars mit einem nicht vertrauenswürdigen Prozess (140), der auf dem UPS (170) läuft;
Aufteilen der Trainingsprozedur des ANN zwischen dem nicht vertrauenswürdigen Prozess (140) und dem vertrauenswürdigen Prozess (130), wobei der nicht vertrauenswürdige Prozess (140) so konfiguriert ist, dass er verschlüsselte Eingaben für die Neuronen des ANN mittels des homomorphen Verschlüsselungsschemas berechnet, während der vertrauenswürdige Prozess (130) so konfiguriert ist, dass er die Ausgaben der Neuronen auf der Grundlage der jeweiligen verschlüsselten Neuroneneingaben, wie sie vom nicht vertrauenswürdigen Prozess (140) bereitgestellt werden, berechnet,
ferner Durchführen einer Feed-Forward-Phase, die folgende Schritte einschließt:
Senden durch den vertrauenswürdigen Prozess (130) für jede Schicht des ANN, der Ausgabe der Neuronen einer jeweiligen Schicht, verschlüsselt mit dem öffentlichen Schlüssel PK, an den nicht vertrauenswürdigen Prozess (140); und **gekennzeichnet durch**
Berechnen **durch** den nicht vertrauenswürdigen Prozess (140) einer Eingabe für die jeweilige nachfolgende Schicht des ANN **durch** Ausführung einer homomorphen Matrixmultiplikation der jeweiligen verschlüsselten Gewichtsmatrix und der verschlüsselten Ausgabe, wie sie vom vertrauenswürdigen Prozess (130) empfangen wurde,
ferner Durchführen einer Backpropagation-Phase zur Minimierung der Kostenfunktion des ANN durch Anpassung der Gewichte, einschließlich der folgenden Schritte:
Berechnen **durch** den vertrauenswürdigen Prozess (130) eines Gradienten der Gewichte für jede Schicht des ANN; und
Verschlüsseln der Gradienten mit dem öffentlichen Schlüssel PK sowie Senden der verschlüsselten Gradienten an den nicht vertrauenswürdigen Prozess (140),
wobei am Ende der Propagationsphase der nicht vertrauenswürdige Prozess (140) für jede Schicht des ANN eine Gradienten-Gewichtsmatrix hält, die mit dem öffentlichen Schlüssel PK verschlüsselt ist.

12. Nichtflüchtiges, computerlesbares Medium zum Ferntraining eines künstlichen neuronalen Netzes mit einem Host-Verarbeitungssystem (110), das eine vertrauenswürdige Ausführungsumgebung TEE (120) und ein nicht vertrauenswürdiges Verarbeitungssystem UPS (170) umfasst, wobei das Medium Programmcode zum Konfigurieren des Host-Verarbeitungssystems (110) umfasst, zum:
Ausführen eines in der TEE (120) bereitgestellten vertrauenswürdigen Prozesses (130), der ein Schlüsselpaar für ein homomorphes Verschlüsselungsschema berechnet und Teilen des öffentlichen Schlüssels PK des Schlüsselpaars mit einen nicht vertrauenswürdigen Prozess (140), der auf dem UPS (170) läuft;
Aufteilen der Trainingsprozedur des ANN zwischen dem nicht vertrauenswürdigen Prozess (140) und dem vertrauenswürdigen Prozess (130), wobei der nicht vertrauenswürdige Prozess (140) so konfiguriert ist, dass er verschlüsselte Eingaben für die Neuronen des ANN mittels des homomorphen Verschlüsselungsschema berechnet, während der vertrauenswürdige Prozess (130) so konfiguriert ist, dass er die Ausgaben der Neuronen auf der Grundlage der jeweiligen verschlüsselten Neuroneneingaben berechnet, wie sie vom nicht vertrauenswürdigen Prozess (140) bereitgestellt werden,
ferner Durchführen einer Feed-Forward-Phase, die die folgenden Schritte einschließt:
Senden durch den vertrauenswürdigen Prozess (130) für jede Schicht des ANN, der Ausgabe der Neuronen einer jeweiligen Schicht, verschlüsselt mit dem öffentlichen Schlüssel PK, an den nicht vertrauenswürdigen Prozess (140); und **gekennzeichnet durch**
Berechnen, **durch** den nicht vertrauenswürdigen Prozess (140), einer Eingabe für die jeweilige folgende Schicht des ANN **durch** Ausführung einer homomorphen Matrixmultiplikation der jeweiligen verschlüsselten Gewichtsmatrix und der verschlüsselten Ausgabe, wie sie vom vertrauenswürdigen Prozess (130) empfangen wurde,
ferner Durchführen einer Backpropagation-Phase zur Minimierung der Kostenfunktion des ANN durch Anpassung der Gewichte, einschließlich der folgenden Schritte:
Berechnen **durch** den vertrauenswürdigen Prozess (130) eines Gradienten der Gewichte für jede Schicht des ANN; und
Verschlüsseln der Gradienten mit dem öffentlichen Schlüssel PK sowie Senden der verschlüsselten Gradienten an den nicht vertrauenswürdigen Prozess (140),
wobei am Ende der Propagationsphase der nicht vertrauenswürdige Prozess (140) für jede Schicht des ANN eine mit dem öffentlichen Schlüssel PK verschlüsselte Gradienten-Gewichtsmatrix hält.

## Revendications

1. Procédé mis en œuvre par ordinateur pour l'apprentissage d'un réseau neuronal artificiel, ANN, sur un hôte distant (110), le procédé comprenant :
le calcul, par un processus fiable (130) déployé dans un environnement d'exécution fiable, TEE (120), sur l'hôte distant (110), d'une paire de clés pour un schéma de chiffrement homomorphe et le partage, par le processus fiable (130), de la clé publique, PK, de la paire de clés avec un processus non fiable (140) déployé sur l'hôte distant (110) ; et
la répartition de la procédure d'entraînement de l'ANN entre le processus non fiable (140) et le processus fiable (130), le processus non fiable (140) calculant des entrées chiffrées des neurones de l'ANN au moyen du schéma de chiffrement homomorphe, tandis que le processus fiable (130) calcule les sorties des neurones sur la base des entrées chiffrées respectives des neurones fournies par le processus non fiable (140),
le procédé comprenant en outre une phase de propagation vers l'avant, comprenant les étapes consistant à :
envoyer, par le processus fiable (130) pour chaque couche de l'ANN, la sortie des neurones d'une couche respective, chiffrée à l'aide de la clé publique, PK, au processus non fiable (140) ; et caractérisé en ce
calculer, par le processus non fiable (140), une entrée pour la couche suivante correspondante de l'ANN en exécutant une multiplication matricielle homomorphe de la matrice de poids chiffrée respective et de la sortie chiffrée reçue du processus fiable (130),
le procédé comprenant en outre une phase de rétropropagation visant à minimiser la fonction de coût de l'ANN en ajustant les poids, comprenant les étapes suivantes :
le calcul, par le processus fiable (130), pour chaque couche de l'ANN, d'un gradient des poids ; et
le chiffrement des gradients à l'aide de la clé publique, PK, et l'envoi des gradients chiffrés au processus non fiable (140),
dans lequel, à la fin de la phase de propagation, le processus non fiable (140) détient, pour chaque couche de l'ANN, une matrice de poids des gradients, chiffrée à l'aide de la clé publique, PK.

2. Procédé selon la revendication 1, dans lequel le schéma de chiffrement homomorphe est paramétré pour calculer des fonctions quadratiques.

3. Procédé selon la revendication 1 ou 2, comprenant en outre :
le chiffrement, par le processus fiable (130), des entrées et des paramètres, y compris les poids, de l'ANN à l'aide de la clé publique, PK ;
l'envoi des entrées et des paramètres chiffrés au processus non fiable (140) ; et
le calcul, par le processus fiable (130) en coopération avec le processus non fiable (140), de la sortie de l'ANN et du gradient des poids à partir des entrées chiffrées et des poids chiffrés.

4. Procédé selon l'une des revendications 1 à 3, comprenant en outre une phase d'initialisation, comprenant les étapes consistant à :
calculer, par le processus fiable (130), des matrices de poids aléatoires pour toutes les couches de l'ANN, chiffrer les matrices de poids aléatoires à l'aide de la clé publique, PK, et envoyer les matrices de poids chiffrées au processus non fiable (140).

5. Procédé selon la revendication 4, comprenant en outre :
le déchiffrement, par le processus fiable (130), de l'entrée destinée à la couche suivante correspondante de l'ANN reçue du processus non fiable (140) ; et
le calcul, par le processus fiable (130), d'une sortie de la couche suivante correspondante en appliquant la fonction d'activation respective à l'entrée déchiffrée.

6. Procédé selon l'une des revendications 1 à 5, comprenant en outre une phase de mise à jour des poids, comprenant les étapes suivantes :
le calcul, par le processus non fiable (140), à partir des matrices de poids chiffrées et des matrices de poids de gradient, de matrices de poids mises à jour en effectuant, pour chaque couche de l'ANN, une addition matricielle homomorphe de la matrice de poids chiffrée respective et de la matrice de poids de gradient chiffrée respective.

7. Procédé selon l'une des revendications 1 à 6, comprenant en outre :
l'itération de la phase de propagation vers l'avant, de la phase de rétropropagation et de la phase de mise à jour des poids sur chaque échantillon d'un ensemble de données d'apprentissage de l'ANN.

8. Procédé selon l'une des revendications 1 à 7, comprenant en outre une procédure de renouvellement des poids, comprenant les étapes suivantes :
l'envoi, par le processus non fiable (140), des matrices de poids chiffrées de chaque couche de l'ANN au processus fiable (130), puis leur suppression ;
le déchiffrement, par le processus fiable (130), des matrices de poids chiffrées reçues afin d'obtenir les matrices de poids en clair, et le chiffrement de chaque matrice de poids en clair dans un nouveau texte chiffré ; et
l'envoi, par le processus fiable (130), des matrices de poids chiffrées renouvelées au processus non fiable (140).

9. Procédé selon la revendication 8, dans lequel la procédure de renouvellement des poids est exécutée lorsque le nombre de mises à jour des poids atteint une limite supérieure telle que définie par les paramètres du schéma de chiffrement homomorphe.

10. Procédé selon l'une des revendications 1 à 9, dans lequel les données d'apprentissage de l'ANN sont fournies, chiffrées à l'aide de la clé publique, PK, du processus fiable (130), par une pluralité de propriétaires de données différents (150).

11. Système de traitement d'hôtes destiné à l'apprentissage à distance d'un réseau neuronal artificiel, en particulier pour l'exécution d'un procédé selon l'une des revendications 1 à 10, le système de traitement d'hôtes (110) comprenant un environnement d'exécution fiable, TEE (120), et un système de traitement non fiable, UPS (170), et étant configuré pour :
exécuter un processus fiable (130) déployé dans le TEE (120) qui calcule une paire de clés pour un schéma de chiffrement homomorphe et partage la clé publique, PK, de la paire de clés avec un processus non fiable (140) s'exécutant sur l'UPS (170) ;
répartir la procédure d'apprentissage de l'ANN entre le processus non fiable (140) et le processus fiable (130), le processus non fiable (140) étant configuré pour calculer des entrées chiffrées des neurones de l'ANN au moyen du schéma de chiffrement homomorphe, tandis que le processus fiable (130) est configuré pour calculer les sorties des neurones sur la base des entrées chiffrées respectives des neurones fournies par le processus non fiable (140),
effectuer en outre une phase de propagation vers l'avant, comprenant les étapes suivantes :
envoyer, par le processus fiable (130), pour chaque couche de l'ANN, de la sortie des neurones d'une couche respective, chiffrée à l'aide de la clé publique, PK, au processus non fiable (140) ; et caractérisé en ce
calculer, par le processus non fiable (140), une entrée pour la couche suivante correspondante de l'ANN en exécutant une multiplication matricielle homomorphe de la matrice de poids chiffrée respective et de la sortie chiffrée reçue du processus fiable (130),
effectuer en outre une phase de rétropropagation visant à minimiser la fonction de coût de l'ANN en ajustant les poids, comprenant les étapes suivantes :
le calcul, par le processus fiable (130), pour chaque couche de l'ANN, d'un gradient des poids ; et
le chiffrement des gradients à l'aide de la clé publique, PK, et l'envoi des gradients chiffrés au processus non fiable (140),
dans lequel, à la fin de la phase de propagation, le processus non fiable (140) détient, pour chaque couche de l'ANN, une matrice de poids de gradient chiffrée à l'aide de la clé publique, PK.

12. Support non transitoire lisible par ordinateur destiné à l'apprentissage à distance d'un réseau neuronal artificiel avec un système de traitement d'hôtes (110) comprenant un environnement d'exécution fiable, TEE (120), et un système de traitement non fiable, UPS (170), le support comprenant un code de programme pour configurer le système de traitement d'hôtes (110) afin de :
exécuter un processus fiable (130) déployé dans le TEE (120) qui calcule une paire de clés pour un schéma de chiffrement homomorphe et partage la clé publique, PK, de la paire de clés avec un processus non fiable (140) s'exécutant sur l'UPS (170) ;
répartir la procédure d'apprentissage de l'ANN entre le processus non fiable (140) et le processus fiable (130), le processus non fiable (140) étant configuré pour calculer des entrées chiffrées des neurones de l'ANN au moyen du schéma de chiffrement homomorphe, tandis que le processus fiable (130) est configuré pour calculer les sorties des neurones sur la base des entrées chiffrées respectives des neurones fournies par le processus non fiable (140),
effectuer en outre une phase de propagation vers l'avant, comprenant les étapes suivantes :
l'envoi, par le processus fiable (130) pour chaque couche de l'ANN, de la sortie des neurones d'une couche respective, chiffrée à l'aide de la clé publique, PK, au processus non fiable (140) ; et caractérisé en ce
le calcul, par le processus non fiable (140), d'une entrée pour la couche suivante respective de l'ANN en exécutant une multiplication matricielle homomorphe de la matrice de poids chiffrée respective et de la sortie chiffrée reçue du processus fiable (130),
effectuer en outre une phase de rétropropagation visant à minimiser la fonction de coût de l'ANN en ajustant les poids, comprenant les étapes suivantes :
le calcul, par le processus fiable (130), pour chaque couche du réseau neuronal artificiel, d'un gradient des poids ; et
le chiffrement des gradients à l'aide de la clé publique, PK, et l'envoi des gradients chiffrés au processus non fiable (140),
dans lequel, à la fin de la phase de propagation, le processus non fiable (140) détient, pour chaque couche de l'ANN, une matrice de poids de gradient chiffrée à l'aide de la clé publique, PK.
